# EUROPÄISCHE PATENTSCHRIFT

(11) **EP 0 967 140 B1**
(45) Veröffentlichungstag und Bekanntmachung des Hinweises auf die Patenterteilung: **10.09.2003**
(21) Anmeldenummer: 99111645.0
(22) Anmeldetag: 16.06.1999
(51) Int. Cl.: B62H 5/00, B62H 5/14

(54) **Diebstahlsicherung für Zwei- oder Dreiräder**
Antitheft device for two or three wheeled vehicles
Antivol pour véhicule à deux ou trois roues

(30) Priorität: 16.12.1998 DE 29822367 U; 24.06.1998 DE 29811239 U
(43) Veröffentlichungstag der Anmeldung: 29.12.1999
(73) Patentinhaber: Langhanki, Bruno, 47228 Duisburg (DE)
(72) Erfinder: Langhanki, Bruno, 47228 Duisburg (DE)

(56) Entgegenhaltungen:
- WO-A-83/01646
- CH-A- 678 556
- US-A- 3 834 196

## Beschreibung

Die Erfindung betrifft eine Diebstahlsicherung für Zwei- oder Dreiräder wie Fahrräder, Mofas, Mopeds, Motorräder, welche wenigstens einen längsseitig aufklappbaren, rohrförmigen Ring aufweist, der einen Reifen des Zwei- oder Dreirads umschließen kann, wobei die Ringhälften über eine Scharnieranordnung mit einer gemeinsamen Schwenkachse miteinander fest verbunden sind und ihre der Schwenkachse im wesentlichen gegenüberliegenden Kanten lösbar miteinander verbindbar sind, um einen geschlossenen Ring zu bilden, und wobei nur vom befugten Benutzer lösbare Verbindungselemente zum Verriegeln des Rings im geschlossenen Zustand vorgesehen sind.

Eine Vielzahl von Diebstahlsicherungen für Fahrräder ist bekannt. So ist es seit langem bekannt und üblich, Fahrräder gegen Diebstahl und unbefugte Benutzung mittels an der Hinterradgabel angeschraubter Druckschlösser zu sichern, bei denen in offenem Zustand der Schlüssel im Schloß festgehalten ist und erst dann entfernt werden kann, wenn der zum Verriegeln vorgesehene Sperriegel zwischen die Speichen des Hinterrades eingedrückt wird. Diese Druckschlösser lassen sich jedoch leicht abschrauben oder auf andere Weise, insbesondere gewaltsam, entfernen und bieten daher nur eine sehr geringe Sicherheit. Daher haben zusätzliche Sicherheits-, Bügel-, Schwenkbügel-, Stahlkabel- und Kettenschlösser eine weite Verbreitung gefunden. Mit diesen Schlössern kann zwar der schnelle Zugriff von Dieben erschwert werden, aber eine ausreichende Sicherheit gegen Diebstahl wird damit nicht erreicht. So können selbst verhältnismäßig stabile Bügel-, Stahlkabel- und Kettenschlösser mittels eines Bolzenschneiders schnell und weitgehend problemlos entfernt werden.

Eine Diebstahlsicherung der eingangs genannten Art ist aus der US-A-3 834 196 bekannt. Hier wird die Verriegelung im Bereich der zu öffnenden oder schließenden Kanten des Ringes vorgenommen. Zum Verriegeln muss diese bekannte Diebstahlsicherung entweder zunächst durch Speichen gesteckt und dann um den Reifen umgeklappt werden. Diese Handhabung ist umständlich. Möglich wäre auch das Zusammenklappen der beiden Ringhälften von außen um den Reifen. Um danach die Ringhälften zu verriegeln, müßte in diesem Fall der Verriegelungsteil der Diebstahlsicherung von innen nach außen um den Reifen herum gedreht werden. Dies ist in der Regel nur unter Schwierigkeiten möglich, insbesondere, wenn die Diebstahlsicherung eng am Reifen anliegt.

Aus der CH-A-678 556 ist außerdem eine Abschließvorrichtung bekannt, um ein Fahrrad oder Motorrad an einem festen Standort sichern oder abschließen zu können. Hier sind zwei Ringhälften einzeln an einem stationären Grundkörper um jeweils eigene Schwenkachsen schwenkbar. Der Grundkörper ist fest mit dem Untergrund verbunden. Das nur vom befugten Benutzer lösbare Verbindungselement zum Verriegeln des Rings im geschlossenen Zustand ist hier im Bereich der beiden genannten Schwenkachsen angeordnet.

Der Erfindung liegt daher die Aufgabe zugrunde, eine preisgünstige Diebstahlsicherung der eingangs genannten Art zu entwickeln, die einen erheblich besseren Schutz gegen ein gewaltsames Entfernen, insbesondere mit einem Bolzenschneider oder ähnlichen Werkzeugen, ermöglicht und gleichzeitig schnell, einfach und sicher vom befugten Benutzer zu verwenden ist.

Diese Aufgabe wird bei der Diebstahlsicherung der eingangs genannten Art dadurch gelöst, daß an den Ringhälften im Bereich der schwenkbaren Verbindung jeweils ein radial nach außen ragender Verbindungsansatz angeordnet ist, welcher die Scharnieranordnung mit der Schwenkachse bildet, und daß in den Verbindungsansätzen bei geschlossenem Ring fluchtende Durchgangsöffnungen zur Aufnahme eines in diese einsteckbaren und verriegelbaren Verriegelungselementes ausgebildet sind.

Der Ring verhindert im geschlossenen Zustand die Benutzung des Fahrrades, da die Drehung des Rades blockiert wird. Die relativ einfache Ausgestaltung der Diebstahlsicherung ermöglicht außerdem eine kostengünstige Herstellung dieser Vorrichtung.

Die Verbindungsansätze können besonders kräftig und stabil ausgebildet werden, um die Scharnieranordnung vor einer gewaltsamen Beschädigung oder Zerstörung zu schützen.

Wegen der stabilen Ausbildung der Verbindungsansätze sind auch die Verriegelungselemente gut geschützt.

Die Verriegelungselemente können beispielsweise als in die Ösen bzw. Durchgangsöffnungen einsteckbare und dort verriegelbare Bolzen ausgestaltet sein. Ganz besonders bevorzugt ist es, wenn der Bolzen als Steckschloß ausgebildet und die Innenseite der Röhrchen oder Durchgangsöffnungen daran angepaßt ist.

Eine wirksame Sicherung gegen gewaltsames Öffnen des Steckschlosses ist gegeben, wenn weiterhin dieses Steckschloß so beschaffen ist, daß es im verriegelten Zustand axial fixiert, jedoch drehbar ist, so daß es nicht ausgebohrt werden kann.

Eine zusätzliche Sicherung gegen ein Auseinanderreißen der erfindungsgemäßen Diebstahlsicherung durch Ausübung einer Kraft in Richtung der Ringachse wird erreicht, wenn an der Kante einer Ringhälfte ein sich in Umfangsrichtung auf die andere Kante zu erstreckender Vorsprung angebracht ist, der bei geschlossener Diebstahlsicherung in eine Aufnahme an der anderen Kante formschlüssig eingreift.

Zur zusätzlichen Sicherung gegen ein Aufhebeln des Rings mit einem entsprechenden Werkzeug, z. B. einem Schraubenzieher, ist es außerdem von Vorteil, wenn in den Bereichen der bei geschlossenem Ring zwischen den Ringhälften gebildeten Spalten jeweils Laschen vorgesehen sind, welche diese Spalten abdecken.

In einer weiteren Ausgestaltung der Erfindung ist am Außenumfang der Ringhälften jeweils ein Wulst ausgebildet. Dieser Wulst verstärkt das Profil der Ringhälften insbesondere gegen Aufbiegen. Außerdem erschwert er das Ansetzen eines Schneidinstrumentes, beispielsweise eines Bolzenschneiders. Dieser Effekt wird auch dadurch verstärkt, daß in weiterer Ausgestaltung der Wulst ein etwa kreisabschnittförmiges Querschnittsprofil hat, an welchem ein Schneidinstrument abrutscht, wie anhand eines Ausführungsbeispiels dargelegt wird.

Besonders von Vorteil ist, wenn der Wulst so ausgestaltet wird, daß der Außenumfang des geschlossenen Ringes deutlich größer als die lichte Weite zwischen zwei Bügeln eines herkömmlichen fest verankerten Fahrradständers ist. Wenn die Diebstahlsicherung an dem zwischen diesen Bügeln steckenden Teil des Rades angebracht wird, kann das Rad nicht mehr aus den Bügeln herausgehoben werden.

Die erfindungsgemäße Diebstahlsicherung kann auch vorteilhaft paarweise eingesetzt werden, wobei die beiden Ringe durch ein schwer zerstörbares Band, beispielsweise ein Stahlband, miteinander verbunden werden. Das Stahlband kann mit den Ringen fest verbunden sein; alternativ dazu kann es an seinen Enden Schlaufen haben, durch die die Ringe hindurchgezogen werden. Auf diese Weise lassen sich beispielsweise zwei Fahrräder miteinander verbinden, so daß das Forttragen der Räder zusätzlich erschwert wird.

Zum Schutz des Reifens und der Felge ist es ferner bevorzugt, wenn die Innenseite des Rings mit einem komprimierbaren Material, insbesondere Schaumstoff, ausgekleidet ist.

Für eine hohe Sicherheit einerseits und eine praktische Anwendbarkeit andererseits ist außerdem eine Breite des Rings von 2 bis 5 cm günstig. Aus dem gleichen Grunde ist ein Durchmesser des Rings von 5 bis 10 cm von Vorteil.

Eine hohe Stabilität der Diebstahlsicherung gegen einen gewaltsamen Zugriff wird erreicht, wenn der Ring aus Stahl besteht und insbesondere eine Dicke von 1 bis 3 mm hat.

Im folgenden werden mehrere Ausführungsbeispiele der Erfindung anhand von Zeichnungen näher beschrieben. Es zeigen:
- Figur 1: eine erfindungsgemäße Diebstahlsicherung in perspektivischer Ansicht;
- Figur 2: eine Ansicht ähnlich der Figur 1 in einer anderen Ausgestaltung;
- Figur 3: schematisch eine Diebstahlsicherung mit angesetztem Bolzenschneider;
- Figur 4: eine Seitenansicht zweier Ringhälften gemäß einer Ausgestaltung wie in Figur 1;
- Figur 5: einen Schnitt durch die Anordnung gemäß Figur 4 entlang der Schnittlinie VI-VI;
- Figur 6: eine Ansicht gemäß dem Pfeil VII in Figur 4;
- Figur 7: eine Ansicht gemäß dem Pfeil VIII in Figur 4;
- Figur 8: einen Schnitt gemäß der Schnittlinie IX-IX in Figur 4;
- Fig. 9: eine Diebstahlsicherung mit zwei miteinander verbundenen Ringen;
- Fig. 10: schematisch eine Diebstahlsicherung an einem in einem Fahrradständer stehenden Rad.

In allen Zeichnungen haben gleiche Bezugszeichen die gleiche Bedeutung und werden daher gegebenenfalls nur einmal erläutert.

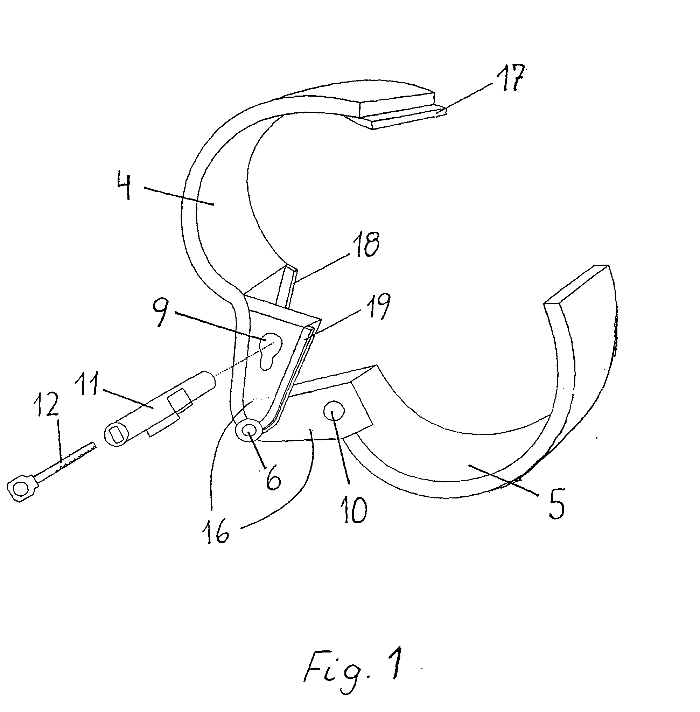

Figur 1 zeigt ein erfindungsgemäßes Ausführungsbeispiel der Diebstahlsicherung. Die eigentlichen Ringhälften 4, 5 bestehen hier jeweils aus einem gestanzten und entsprechend gebogenen Flacheisen. An jeder Ringhälfte angeschweißt ist ein gegossener Verbindungsansatz 16, die über die Schwenkachse 6 scharnierartig miteinander verbunden sind. In beiden Verbindungsansätzen 16 ist jeweils eine Durchgangsbohrung 9, 10 vorgesehen, welche bei geschlossenem Ring miteinander fluchten und das Einführen eines Steckschlosses 11 ermöglichen. Auf diese Weise können die Ringhälften 4, 5 in geschlossenem Zustand verriegelt werden.

Von Vorteil ist es auch, wenn der Ring von außen deutlich sichtbar als Diebstahlsicherung erkennbar ist, z. B. durch einen Anstrich mit roter oder gelber Leuchtfarbe. Der Ring ist von innen mit Schaumstoff ausgekleidet. Diese Auskleidung ist in der Figur nicht dargestellt.

Der Ring kann von einem Bolzenschneider nicht aufgeschnitten werden, da einerseits der Ring zu breit und zu dick und andererseits der Zwischenraum zwischen der Innenseite des Rings und der Außenseite des Reifens bzw. der Felge zu klein ist, um eine Schneidbacke des Bolzenschneiders einzuführen. Daher ist es von besonderem Vorteil, wenn der Ring nur um den Reifen und die Felge, nicht aber auch zusätzlich um die Gabel herumgelegt wird. Ein gewaltsames Entfernen dieser Diebstahlssicherung ist nur mit einer Metallsäge oder einer Trennscheibe möglich, erfordert also für einen potentiellen Dieb zuviel Zeit.

Vorzugsweise wird der Ring am Hinterrad eines Fahrrades oder eines Mofas oder dergl. angebracht. Der besondere Vorteil dieses Ausführungsbeispiels liegt in der schnellen und kostengünstigen Herstellung, da einerseits von gestanzten Flacheisen und andererseits von in großer Stückzahl hergestellten Gießteilen ausgegangen wird, die ein vielseitig einsetzbares Scharnier bilden. Das gleiche Scharnier kann nämlich für sämtliche unterschiedliche Ringdurchmesser der erfindungsgemäßen Diebstahlsicherung verwendet werden.

Um ein Aufhebeln der Diebstahlsicherung durch das Einführen eines flachen Gegenstandes, z. B. einer Schraubendreherklinge, zu vereiteln, sind Laschen 17, 18, 19 im Bereich der aufeinanderliegenden, korrespondierenden Flächen der Ringhälften vorgesehen, die diese Schnittflächen abdecken.

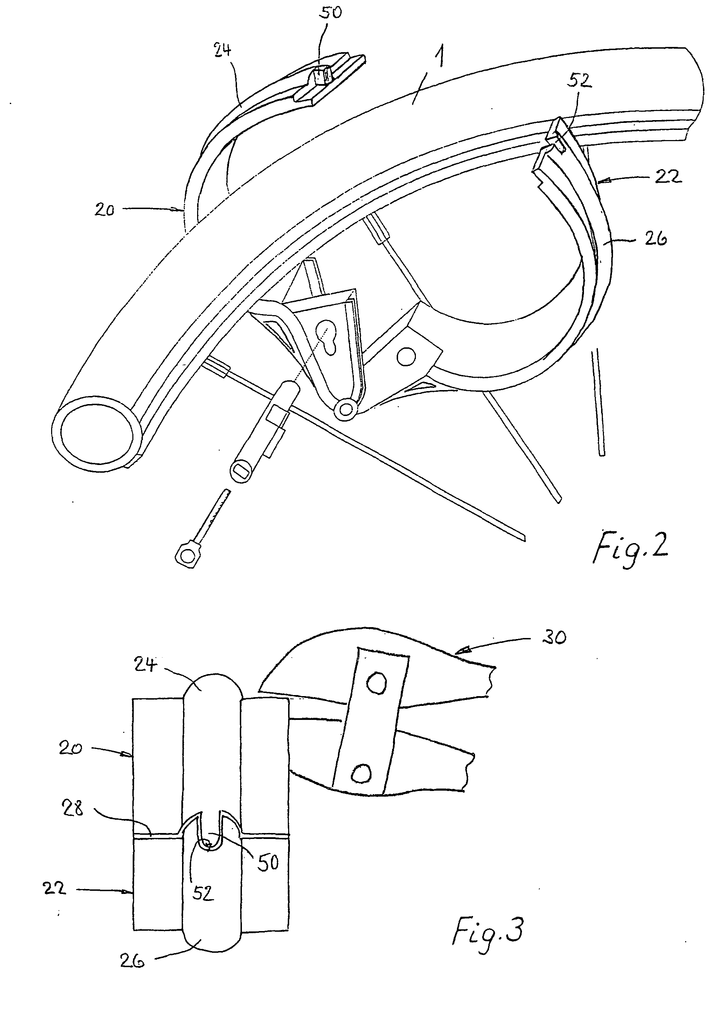

Figur 2 zeigt eine Ansicht etwa gemäß der Figur 1, die sich jedoch von dem in Figur 1 dargestellten Ausführungsbeispiel dadurch unterscheidet, daß die beiden Ringhälften 20, 22 an ihrem Außenumfang einen Wulst 24, 26 aufweisen, welcher den jeweiligen Ringhälften 20, 22 eine beträchtlich größere Festigkeit gegen Aufbiegen verleiht. Außerdem erschwert der Wulst 24, 26 das Ansetzen eines Werkzeuges, beispielsweise eines Bolzenschneiders, wie insbesondere in Figur 3 dargestellt ist. An der Ringhälfte 20 ist an dessen freiem Ende ein Vorsprung 50 ausgebildet, welcher formschlüssig in eine an der anderen Ringhälfte 22 ausgebildete Aufnahme 52 eingreift, um eine seitliche Verschiebung der Ringhälfte in diesem Bereich zu verhindern.

Figur 3 zeigt schematisch den aus den beiden Ringhälften 20 und 22 bestehenden, geschlossenen Ring in einer auf den Schließspalt 28 gerichteten Ansicht. Die Figur läßt erkennen, daß ein an den Ring angesetzter Bolzenschneider 30 nur mit seinem vorderen Schneidenbereich den Ring erfassen kann, da der Wulst 24, 26 ihn daran hindert, den Ring weiter als in der dargestellten Weise zu erfassen.

Die kreisabschnittförmige Querschnittsform des Wulstes 24 hat außerdem den Effekt, daß die obere Schneide des Bolzenschneiders 30 beim Ansetzen an den Wulst 24 von diesem abrutschen würde, d.h. diesen demnach nicht durchtrennen könnte.

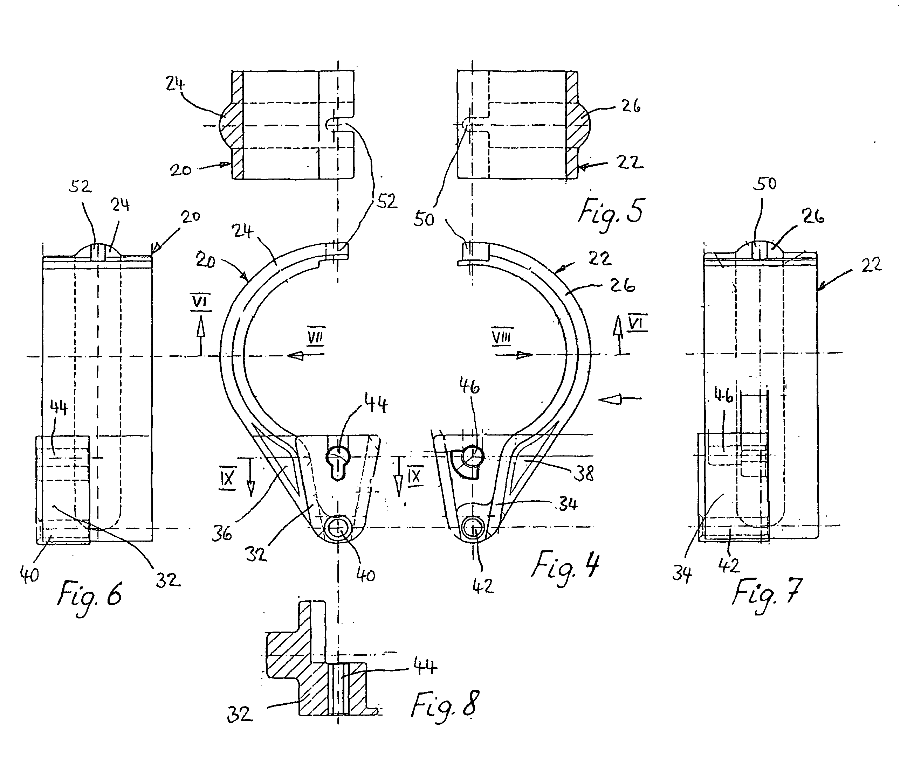

Die Figuren 4 bis 8 zeigen die beiden Ringhälften 20 und 22 der Figur 2 in einer mehr ins einzelne gehenden Darstellung. Die Ringhälften 20, 22 sind jeweils einstückig, d.h. mit den Verbindungsansätzen 32 bzw. 34 gegossen. Im Bereich der Verbindungsansätze 32, 34 sind Verstärkungsrippen 36 bzw. 38 vorgesehen, die ein Aufbiegen der Ringhälften erschweren. Die Verstärkungsrippen 36, 38 gehen in den jeweiligen Wulst 24 bzw. 26 der beiden Ringhälften 20 bzw. 22 über. Die Scharnierbohrungen 40, 42 werden zum Zusammenbau der Diebstahlsicherung miteinander gefluchtet und nehmen einen in der Zeichnung nicht dargestellten Scharnierbolzen auf. Die Durchgangsöffnungen 44 der Ringhälfte 20 sowie 46 der Ringhälfte 22 sind bei geschlossener Diebstahlsicherung zueinander fluchtend ausgerichtet, so daß sie ein Verriegelungselement, beispielsweise ein Steckschloß aufnehmen können, wie insbesondere anhand der Figur 1 schon dargelegt worden ist.

Figur 5 zeigt einen Schnitt entlang der Schnittlinie VI-VI in Figur 4. Dort ist insbesondere die kreisabschnittförmige Querschnittsform der Wülste 24 bzw. 26 zu erkennen. Die Figur 5 zeigt im Zusammenhang mit der Figur 4 auch die Sicherung gegen ein Verschieben der beiden Ringhälften gegeneinander in axialer Richtung. Dazu ist an dem freien Ende der Ringhälfte 22 ein in Umfangsrichtung ausgerichteter Vorsprung 50 vorgesehen, welcher in eine an der anderen Ringhälfte 20 im Bereich von dessen freiem Ende ausgebildete Aufnahme 52 formschlüssig eingreift.

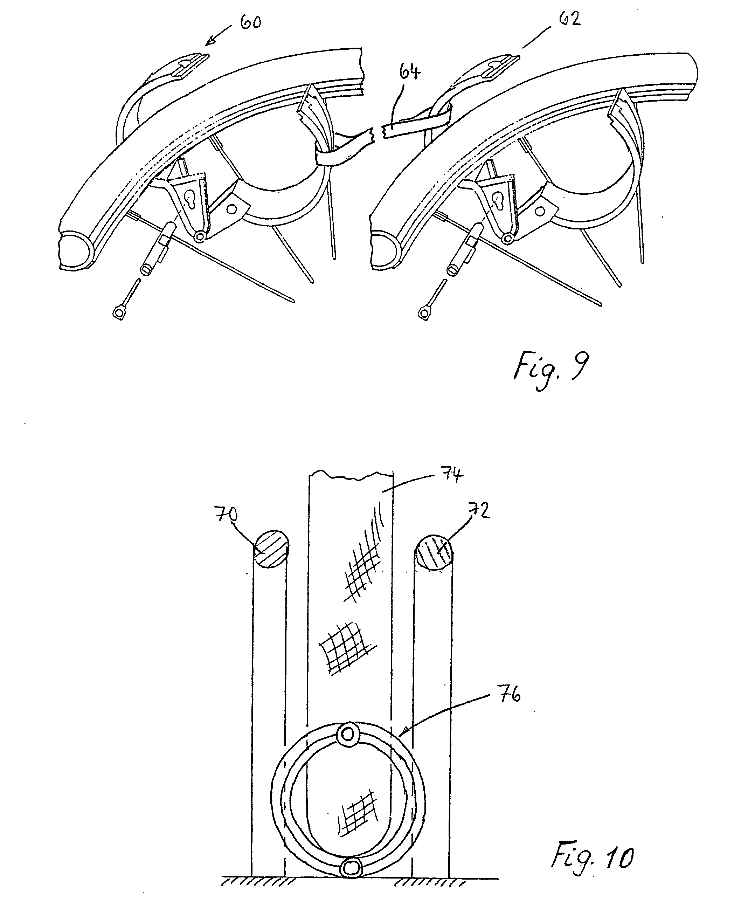

Die Figuren 6 und 7 zeigen jeweils Ansichten in Richtung der Pfeile VII bzw. VIII, und sie lassen insbesondere nochmals die Verbindungsansätze 32 bzw. 34 mit den darin angeordneten Scharnierbohrungen 40 bzw. 42 und den zur Aufnahme eines Verriegelungselementes vorgesehenen Durchgangsöffnungen 44 bzw. 46 erkennen.

Figur 8 zeigt einen Schnitt entlang der Schnittlinie IX-IX durch den Verbindungsansatz 32 auf der Höhe der Durchgangsbohrung 44.

Figur 9 zeigt eine besondere Verwendung einer erfindungsgemäßen Diebstahlsicherung, bei der zwei derartige Diebstahlsicherungen 60, 62 durch ein schwer zerstörbares Verbindungsband 64 miteinander gekoppelt werden. Die Diebstahlsicherungen 60, 62 werden jeweils an zwei Rädern von zwei verschiedenen Fahrrädern befestigt. Zuvor werden die Diebstahlsicherungen 60, 62 durch die beiden Endschlaufen des Verbindungsbandes 64 gezogen. Auf diese Weise wird der Diebstahl der Räder weiter erschwert, da das Abtransportieren von zwei zusammengekoppelten Rädern auf erhebliche Schwierigkeiten stößt.

Alternativ zu der dargestellten Ausgestaltung kann auch ein mit den beiden Diebstahlsicherungen 60, 62 fest verbundenes Verbindungsband vorgesehen sein.

Figur 10 zeigt in einer Vorderansicht ein zwischen zwei Bügel 70, 72 eines üblichen, fest verankerten Fahrradständers eingeführtes Rad, beispielsweise Hinterrad 74 eines Fahrrades oder dergleichen. An dem Rad ist eine Diebstahlsicherung 76 angebracht, deren Außenumfang so groß ist, daß sie nicht mit dem Rad 74 zusammen aus der in Figur 10 gezeigten Lage zwischen den Bügeln 70, 72 herausgehoben werden kann.

Die Diebstahlsicherung kann mit einem Klettband ausgestattet sein, um sie bei Nichtgebrauch an einem an der Lenkstange oder einem anderen Fahrradteil befindlichen Klettband zu befestigen. Bei längeren Phasen der Nichtbenutzung kann die Diebstahlsicherung um ein Rahmenteil des Fahrrades herumgelegt und verriegelt werden.

## Patentansprüche

1. Diebstahlsicherung für Zwei- oder Dreiräder wie Fahrräder, Mofas, Mopeds, Motorräder, welche wenigstens einen längsseitig aufklappbaren, rohrförmigen Ring aufweist, der einen Reifen (1) des Zwei- oder Dreirads umschließen kann, wobei die Ringhälften (4, 5) über eine Scharnieranordnung mit einer gemeinsamen Schwenkachse (6) miteinander fest verbunden sind und ihre der Schwenkachse (6) im wesentlichen gegenüberliegenden Kanten lösbar miteinander verbindbar sind, um einen geschlossenen Ring zu bilden, und wobei nur vom befugten Benutzer lösbare Verbindungselemente (7, 8) zum Verriegeln des Rings im geschlossenen Zustand vorgesehen sind,
**dadurch gekennzeichnet,**
**daß** an den Ringhälften (4, 5) im Bereich der schwenkbaren Verbindung jeweils ein radial nach außen ragender Verbindungsansatz (16) angeordnet ist, welcher die Scharnieranordnung mit der Schwenkachse (6) bildet, und daß in den Verbindungsansätzen (16) bei geschlossenem Ring fluchtende Durchgangsöffnungen (9, 10) zur Aufnahme eines in diese einsteckbaren und verriegelbaren Verriegelungselementes (11) ausgebildet sind.

2. Diebstahlsicherung nach Anspruch 1,
**dadurch gekennzeichnet,**
**daß** an der Kante einer Ringhälfte (20) ein in Umfangsrichtung sich erstreckender Vorsprung (50) angeordnet ist, welcher in eine an der Kante der anderen Ringhälfte (22) ausgebildete Aufnahme (52) formschlüssig eingreift.

3. Diebstahlsicherung nach Anspruch 1 oder 2,
**dadurch gekennzeichnet,**
**daß** in den Bereichen der bei geschlossenem Ring gebildeten Spalten zwischen den Ringhälften (4, 5) jeweils Laschen (17, 18, 19) vorgesehen sind, welche diese Spalte abdecken.

4. Diebstahlsicherung nach einem der Ansprüche 1 bis 3,
**dadurch gekennzeichnet,**
**daß** am Außenumfang der Ringhälften (20, 22) jeweils ein Wulst (24, 26) ausgebildet ist.

5. Diebstahlsicherung nach Anspruch 4,
**dadurch gekennzeichnet,**
**daß** der Wulst (24, 26) einen etwa kreisabschnittförmigen Querschnitt hat.

## Claims

1. Anti-theft device for two or three-wheelers such as cycles, motor-assisted bicycles, mopeds or motor cycles, having at least one tubular ring that opens up longitudinally and can be placed around a tyre (1) of the two or three-wheeler, whereby the ring halves (4, 5) are permanently joined to each other via a hinge arrangement with a common swivel pin (6) the edges of which are located opposite to the swivel pin (6) and can be non-permanently joined to each to form a closed ring, whereby the joining elements (7, 8) for locking the ring when closed can only be opened by the authorised user, **characterised by** a radially outward protruding connecting piece (16) arranged in way of the ring halves (4, 5) in the area of the pivoting joint, forming the hinge arrangement with the swivel pin (6) and holes (9, 10) in the connecting pieces (16) for receiving an insertable and lockable locking element (11), being brought into alignment when the ring is closed.

2. Anti-theft device according to claim 1, **characterised by** a projection (50) extending in circumferential direction arranged on the edge of one ring half (20), positively engaging in a slot (52) located on the edge of the other ring half (22).

3. Anti-theft device according to claim 1 or 2, **characterised by** plates (17, 18, 19) provided to cover the areas of gaps formed between the ring halves (4, 5) when the ring is closed.

4. Anti-theft device according to claims 1 to 3, **characterised by** the provision of one reinforcing segment (24, 26) respectively on the outer circumference of the ring halves (20, 22).

5. Anti-theft device according to claims 1 to 4, **characterised by** the reinforcing segment (24, 26) having a circular cross-section.

## Revendications

1. Système antivol pour bicycles ou tricycles tels que bicyclettes, cyclomoteurs, vélomoteurs, motos, qui présente au moins un anneau de forme tubulaire ouvrable longitudinalement, pouvant enserrer un pneu (1) du bicycle ou du tricycle, les moitiés d'anneau (4, 5) étant fermement reliées entre elles via une charnière avec un axe pivotant commun (6) et leurs arêtes essentiellement opposées à l'axe pivotant (6) étant reliées entre elles de manière détachable pour former un anneau fermé, les éléments de liaison (7, 8) pouvant être détachés uniquement par l'utilisateur autorisé étant prévus pour verrouiller l'anneau à l'état fermé,
**caractérisé par le fait**
**qu'**un embout de liaison (16) en saillie radialement est respectivement disposé sur les moitiés d'anneau (4, 5) au niveau de la liaison pivotante, lequel embout constitue la charnière de l'axe pivotant (6) et par le fait que les embouts (16) ont la forme, lorsque l'anneau est fermé, d'ouvertures de passage alignées (9, 10) pour le logement d'un élément de verrouillage (11) enfichable dans ceux-ci et verrouillable.

2. Système antivol selon revendication 1,
**caractérisé par le fait**
**qu'**une saillie (50) s'étirant dans le sens circonférentiel est disposée sur l'arête d'une moitié de l'anneau (20), laquelle saillie s'emboîte de manière crabotée dans un logement (52) formé sur l'arête de l'autre moitié de l'anneau (22).

3. Système antivol selon revendication 1 ou 2,
**caractérisé par le fait**
**que** des languettes (17, 18, 19) sont prévues dans les zones des fentes formées entre les moitiés d'anneau (4, 5) lorsque l'anneau est fermé, lesquelles languettes recouvrent ces fentes.

4. Système antivol selon les revendications 1 à 3,
**caractérisé par le fait**
**qu'**un bourrelet (24, 26) est formé respectivement sur le pourtour extérieur des moitiés d'anneau (20, 22).

5. Système antivol selon les revendications 1 à 4,
**caractérisé par le fait**
**que** le bourrelet (24, 26) présente une section ayant approximativement la forme d'un segment de cercle.
